# EUROPEAN PATENT APPLICATION

(11) **EP 4 779 996 A1**
(43) Date of publication of application: **22.07.2026**
(21) Application number: 24915562.3
(22) Date of filing: 10.12.2024
(51) Int. Cl.: H04N 21/431, H04N 21/485, H04N 21/41, H04N 21/45, H04N 9/31

(54) **ELECTRONIC DEVICE AND CONTROL METHOD THEREFOR**

(30) Priority: 04.01.2024 KR 20240001430
(71) Applicant: Samsung Electronics Co., Ltd., Suwon-si, Gyeonggi-do 16677 (KR)
(72) Inventor: LEE, Kisung, Suwon-si Gyeonggi-do 16677 (KR); LEE, Pius, Suwon-si Gyeonggi-do 16677 (KR); KIM, Dongyoon, Suwon-si Gyeonggi-do 16677 (KR); YOON, Sangki, Suwon-si Gyeonggi-do 16677 (KR)
(74) Representative: Walaski, Jan Filip
(86) International application number: PCT/KR2024/020222
(87) International publication number: WO 2025/146980

(57) **Abstract**

An electronic device includes an output device, a sensor, memory storing one or more instructions, and one or more processors, and the one or more processors control, based on a multi-view mode being executed, the output device to output a screen including a background area and a plurality of display areas, identify, based on data obtained by the sensor, whether at least one of the plurality of display areas is covered by a peripheral object, and control, based on at least one of the plurality of display areas being identified as covered by the peripheral object, the output device to replace a first display area covered by the peripheral object with a second display area and output the second display area, via execution of the one or more instructions.

## Description

### ,[TECHNICAL FIELD]

This disclosure relates to an electronic device and a control method therefor, and more particularly, to an electronic device outputting an image and a control method therefor.

### [BACKGROUND ART]

With an advancement in the electronic technologies, various types of electronic devices have been developed and provided. In recent years, advancements have continued to be made in the area of electronic devices used in various places such as a house, an office, a public place Beam projectors are widely used in various places such as an office, a theater, a house, a store and the like, and there is a growing demand for such beam projectors. An increasing number of home/portable beam projectors have been provided in various types of form factors, and a market for such beam projectors is growing by 10-15 % every year with due in part to high efficiency of an LED light source and low power consumption.

Additionally, a recent increase in the wired/wireless interface functions between a beam projector and an external device enables a real-time selection and output of various type of contents in various places through a network such as Wi-Fi and 5G.

The above-described particulars may be provided as related art aiming for a better understanding of the matter of the present disclosure. Any argument or determination is not raised as to whether any of the particulars is applicable as prior art relating to the matter of the present disclosure.

### [DISCLOSURE OF INVENTION]

### [TECHNICAL PROBLEM]

According to one or more embodiments, an electronic device includes an output device, a sensor, memory storing one or more instructions, and one or more processors, and via execution of the one or more instructions, the one or more processors control, based on a multi-view mode being executed, the output device to output a screen including a background area and a plurality of display areas, identify, based on data obtained by the sensor, whether at least one among the plurality of display areas is covered by a peripheral object, and control, based on at least one among the plurality of display areas being identified as covered by the peripheral object, the output device to replace a first display area covered by the peripheral object with a second display area and output the second display area.

According to one or more embodiments, the second display area may be provided as an image of which at least one of a display size and a display location differs from that of the first display area and which relates to an image corresponding to the first display area.

According to one or more embodiments, via execution of the one or more instructions, the one or more processors may identify whether at least part of the second display area is covered by the peripheral object, based on the first display area being replaced with the second display area depending on a relationship between a location of the peripheral object and a location for the second display area to be provided, control, based on at least part of the second display area being identified as covered by the peripheral object even after the first display area is replaced with the second display area, the output device to adjust at least one of a display size and a display location of the first display area and output an adjusted first display area, without replacing the first display area with the second display area.

According to one or more embodiments, via execution of the one or more instructions, the one or more processors may control, based on at least part of the second display area being identified as covered by the peripheral object after the first display area is replaced with the second display area, the output device to adjust at least one of a display size and a display location of the second display area and output an adjusted second display.

According to one or more embodiments, the output device may include an image projector, and via execution of the one or more instructions, the one or more processors may identify, based on sensing data obtained by the sensor, a vanishing point of a projection surface to which the screen is output, generate a virtual surface area having a vanishing point identical with the vanishing point of the projection surface, and control the image projector to output a screen including the virtual surface area to an external area of the background area.

According to one or more embodiments, via execution of the one or more instructions, the one or more processors may obtain, based on the sensing data, an image outside the projection surface, generate, based on the image outside the projection surface, the virtual surface area, and reduce the background area and control the image projector to output a screen including the virtual surface area to an external area of the reduced background area.

According to one or more embodiments, via execution of the one or more instructions, the one or more processors may identify, based on at least one of user preference or content use history, the second display area, and control the output device to replace the first display area with the second display area and output the second display area.

According to one or more embodiments, via execution of the one or more instructions, the one or more processors may identify, based on the sensing data, feature information of a space to which the screen is output, identify, based on the feature information of the space, the second display area, and control the output device to replace the first display area with the second display area and output the second display area.

According to one or more embodiments, the background area may be an area having a spatial sense, and via execution of the one or more instructions, the one or more processors may identify a bottom area included in the background area, and control, based on at least part of the second display area being identified as covered by the peripheral object after the first display area is replaced with the second display area, the output device to provide an effect in which the second display area is moved in a forward direction or rearward direction in the bottom area included in the background area.

According to one or more embodiments, the output device may include at least one of a display or an image projector.

According to one or more embodiments, a control method for an electronic device includes outputting, based on a multi-view mode being executed, a screen including a background area and a plurality of display areas, identifying, based on data obtained by the sensor, whether at least one among the plurality of display areas is covered by a peripheral object, and replacing, based on at least one among the plurality of display areas being identified as covered by the peripheral object, a first display area covered by the peripheral object with a second display area and outputting the second display area.

According to one or more embodiments, in a non-transitory computer-readable medium storing computer instructions that when executed by a processor of an electronic device, cause the electronic device to perform operations, the operations include outputting, based on a multi-view mode being executed, a screen including a background area and a plurality of display areas, identifying, based on data obtained by the sensor, whether at least one among the plurality of display areas is covered by a peripheral object, replacing, based on at least one among the plurality of display areas being identified as covered by the peripheral object, a first display area covered by the peripheral object with a second display area and outputting the second display area.

### [BRIEF DESCRIPTION OF THE DRAWINGS]

Above-describe features and other features according to embodiments of the disclosure may be understood more clearly from following descriptions provided with reference to accompanying drawings, wherein:
FIG. 1 is a view provided to explain an embodiment of an electronic device according to one or more embodiments;
FIG. 2A is a block diagram illustrating a configuration of an electronic device according to one or more embodiments;
FIG. 2B is a view provided to explain a specific configuration of an electronic device according to one or more embodiments;
FIG. 3 is a flowchart provided to explain a control method for an electronic device according to one or more embodiments;
FIGS. 4A and 4B are views provided to explain an association image according to one or more embodiments;
FIG. 5 is a view provided to explain a method of providing a multi-view mode according to one or more embodiments;
FIG. 6 is a flowchart provided to explain a control method for an electronic device according to one or more embodiments;
FIG. 7 is a view provided to explain a method of providing a multi-view mode according to one or more embodiments;
FIG. 8 is a flowchart provided to explain a control method for an electronic device according to one or more embodiments;
FIG. 9 is a view provided to explain a method of providing a multi-view mode according to one or more embodiments;
FIG. 10 is a flowchart provided to explain a control method for an electronic device according to one or more embodiments; and
FIG. 11 is a view provided to explain a method of providing a multi-view mode according to one or more embodiments.
DETAILED DESCRIPTION Terms used herein are schematically described, and the matter of the disclosure is described in detail.

General terms currently used as widely as possible are selected as the terms used for the embodiments of the disclosure considering functions in the disclosure, but may be changed based on the intention of those skilled in the art or a judicial precedent, the emergence of a new technology, or the like. In addition, in a specific case, terms arbitrarily chosen by the applicant may be included in the terms used herein. In this case, the meanings of such terms are described in detail in the detailed description of the disclosure. Therefore, the terms used in the disclosure needs to be defined based on the meanings thereof and particulars throughout the disclosure rather than simply the names thereof.

In the disclosure, the expressions "have," "may have," "include," or "may include" and the like indicate the existence of a feature (e.g., a numerical value, a function, an operation or an element such as a part and the like), and do not exclude the existence of an additional feature.

In the disclosure, expressions such as "A or B," "at least one of A or/and B," or "one or more of A or/and B" and the like may include all possible combinations of items listed together. For example, "A or B," "at least one of A and B," or "at least one of A or B" may refer to all cases including (1) only A, (2) only B, or (3) both of A and B.

The expressions "1st," "2nd," "first," or "second" and the like used in the disclosure may be used to refer to various elements regardless of their order and/or importance, and may be used merely to differentiate one element from another but not intended to limit the elements.

Based on one element (e.g., a first element) referred to as being "(operatively or communicatively) coupled with/to or connected with/to" another element (e.g., a second element), it is to be understood that one element may be connected to another element directly, or through yet another element (e.g., a third element).

In the disclosure, the expression "configured to... (or set to)" used in the disclosure may be used interchangeably with, for example, "suitable for...," "having the capacity to...," "designed to...," "adapted to...," "made to...," or "capable of..." depending on circumstances. The term "configured to... (or set to)" may not necessarily mean "specifically designed to..." hardware wise.

In a certain situation, the expression "a device configured to..." may mean "being capable of performing" by the device together with another device or other components. For example, the phrase "a processor configured (or set) to perform A, B and C" may mean an exclusive processor (e.g., an embedded processor) for performing the functions, or a generic-purpose processor (e.g., a CPU or an application processor) capable of performing the functions by executing one or more software programs stored in memory.

Singular forms include plural forms as well, unless explicitly indicated otherwise. In the disclosure, the term "include" or "comprised of" and the like specify the presence of stated features, numbers, steps, operations, elements, parts or combinations thereof but do not imply the exclusion of the presence or addition of one or more other features, numbers, steps, operations, elements, parts or combinations thereof.

In the disclosure, the term "module" or "unit" may perform at least one function or operation, and be implemented by hardware or software or by a combination of hardware and software. Additionally, a plurality of "modules" or a plurality of "units" may be integrated into at least one module and be implemented by at least one processor excluding a "module" or a "unit" that needs to be implemented by specific hardware.

Various elements and areas in the drawings are schematically illustrated. Accordingly, the technical spirit of the disclosure is not limited by relative sizes or distances illustrated in the drawings.

Hereafter, one embodiment of the disclosure is described in greater detail with reference to the drawings.

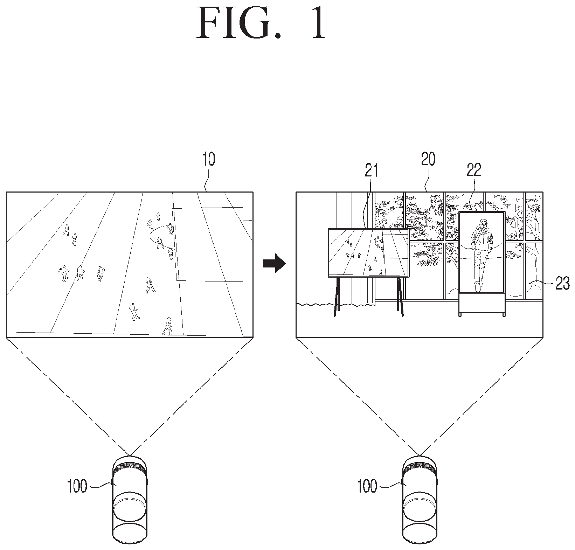

FIG. 1 is a view provided to explain an embodiment of an electronic device according to one or more embodiments.

An electronic device 100 according to one embodiment may be provided with a function of projecting an image, i.e., a projecting function. In particular, the electronic device 100 may be a projector device that projects an image to a wall or a projection surface, and the projector device may be a projector based on a digital light processing method in which an LCD projector or a digital micromirror device (DMD) is used.

Additionally, the electronic device 100 may be implemented as a household display device or an industrial display device, a light device used in daily lives, a sound device including a sound module, a mobile communication device (e.g., a smartphone), a computer device, a mobile multimedia device, a wearable device, or a home appliance and the like. However, the electronic device 100 is not be limited thereto, and may be implemented as an electronic device 100 having one or more functions of the above-described devices. For example, as for the electronic device 100, a projector function may be turned off based on a manipulation of a processor while a lighting function or a speaker function may be turned on, such that the electronic device is used as a display device, a light device or a sound device, and the electronic device may include a microphone or a communication device such that the electronic device is used as an AI speaker.

Referring to FIG. 1, as a multi-view mode is executed while a normal projection screen 10 is provided, a projection screen 20 including a plurality of display areas 21, 22 and a background area 23 may be provided. The multi-view mode may be a mode in which a plurality of content screens is provided at the same time. As one example, the multi-view mode may involve providing the background area 230 together with the plurality of display areas 21, 22 for providing a plurality of contents. For example, the background area may be provided as a predetermined theme image. The predetermined theme may include various themes such as the nature, the country, home space, and the like.

As one example, as any one of the plurality of display areas 21, 22 is selected in the multi-view mode, various types of user experience for enhancing the attention of a user to content provided in the selected display area may be provided.

Accordingly, various embodiments for enhancing the attention of a user to a selected content among a plurality of contents provided in the multi-view mode are described hereafter.

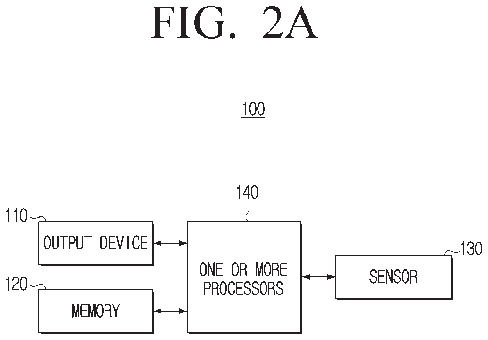

FIG. 2A is a block diagram illustrating a configuration of an electronic device according to one or more embodiments.

Referring to FIG. 2A, the electronic device 100 may include an output device 110, memory 120, a sensor 130, and one or more processors 140. The electronic device 100 may be implemented as a projector projecting an image to a wall or a projection surface or various types of devices having an image projecting function. However, the electronic device may not be limited thereto, and may be implemented as a display device such as a TV.

Referring to FIG. 2A, the electronic device 100 may include an output device 110, memory 120, a sensor 130, and one or more processors 140.

The output device 110 may include at least one of an image projector or a display depending on embodiments of the electronic device 100. As one example, in the case where the electronic device 100 is implemented as a projector, the output device 110 may be implemented as an image projector. As another example, in the case where the electronic device 100 is implemented as a TV, the output device 110 may be implemented as a display. As another example, in the case where the electronic device100 is implemented as a TV, the output device 110 may be implemented as a display. In the case where the output device 110 is implemented as a display, the display may be implemented as a display including a self-light emitting element, or a display including a non-self-light emitting element and backlight. For example, the output device may be implemented as various types of displays such as a liquid crystal display (LCD), an organic light emitting diode (OLED) display, a light emitting diode (LED), a micro LED, a mini LED, a plasma display panel (PDP), a quantum dot (QD) display, a quantum dot light-emitting diode (QLED), and the like. As one example, the display may be implemented as a flat display, a curved display, a flexible display that is foldable or/and rollable, and the like.

Hereafter, descriptions are provided under the assumption that the output device 110 is implemented as an image projector for convenience of descriptions.

The output device 110 may perform the function of projecting light for expressing an image outward and outputting the image to a projection surface. Herein, the projection surface may be part of a physical space to which an image is output or a separate projection surface. The output device 110 may include various types of specific elements such as at least one light source among a lamp, an LED and a laser, a projection lens, a reflector and like.

The output device 110 may project an image based on one among various projection methods (e.g., a cathode-ray tube (CRT) method, a liquid crystal display (LCD) method, a digital light processing (DLP) method, a laser method and the like). The output device 110 may include at least one light source.

The output device 110 may output an image at a 4:3 aspect ratio, a 5:4 aspect ratio, a 16:9 wide aspect ratio, based on the use of the electronic device 100 or user settings and the like, and output the image at various resolutions such as WVGA (854*480), SVGA (800*600), XGA (1024*768), WXGA (1280*720), WXGA (1280*800), SXGA (1280*1024), UXGA (1600*1200), Full HD (1920*1080) and the like according to the aspect ratios.

The output device 110 may perform various functions for adjusting a projection image under the control of the processor 140. For example, the output device 110 may perform a zoom-in/out function, a lens shift function and the like. The zoom-in/out function may include a hardware method of moving a lens and adjusting the size of a screen and a software method of adjusting the size of a screen based on a crop of an image and the like. In the case where the zoom-in/out function is performed, the focal point (focus) of the image needs to be adjusted. For example, the method of adjusting a focal point (focus) may include a manual focus method, a motor focus method, and the like.

The output device 110 may analyze a surrounding environment and a projection environment automatically without a user input and provide a zoom/keystone/focus function. In detail, the output device 110 may provide the zoom/keystone/focus function automatically based on a distance between the electronic device 100 and a projection surface, information on a space where the electronic device 100 is located currently, information on a peripheral light amount and the like.

The memory 120 may store data required for the embodiments. The memory 120 may be implemented in the form of memory embedded in the electronic device 100, or in the form of memory detachable from the electronic device 100 depending on a data storage purpose. For example, in the case of data for driving the electronic device 100, the data may be stored in the memory embedded in the electronic device 100, and in the case of data for an extended function of the electronic device 100, the data may be stored in memory detachable from the electronic device 100. The memory embedded in the electronic device 100 may be implemented as at least one of volatile memory (e.g., dynamic RAM (DRAM), static RAM (SRAM) or synchronous dynamic RAM (SDRAM), and the like), and non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash and the like), hard drive, or solid-state drive (SSD). Additionally, the memory detachable from the electronic device 100' may be implemented in the form of a memory card (e.g., a compact flash (CF), secure digital (SD), micro secure digital (Micro-SD), mini secure digital (Mini-SD), extreme digital (xD), a multimedia card (MMC), and the like), external memory (e.g., USB memory) connectable to a USB port, and the like.

As one example, the memory 120 may store various theme images for providing the background area in the multi-view mode.

As one example, the memory 120 may store various display area images for providing the display area in the multi-view mode. For example, the display area images may include images identical with/or similar to actual display product images. For example, the display area images may include various display product images such as a standing TV image, a wall-mounted TV image, a kiosk image, and the like.

As one example, the memory 120 may store various types of sensing data obtained through a driving O/S, a sensor 130.

As one example, the memory 120 may map an association image with each of the display area images for storage. For example, a wall-mounted TV image as an association image relating to a standing TV image may be mapped and stored. For example, a vertical-mode TV image as an association image relating to a horizontal-mode TV image may be mapped and stored.

The sensor 130 may include a camera. The camera may be turned on based on a predetermined event and perform image capturing. The camera may convert a captured image into an electric signal, and based on the converted signal, generate image data. For example, a subject may be converted into an electric image signal through a charge coupled device (CCD), and the converted image signal may be amplified and converted into a digital signal and then may be signal-processed.

In addition, the sensor 130 may include various types of sensors such as a distance sensor, a luminance sensor, an image sensor, a touch sensor, a proximity sensor, an acceleration sensor, a geomagnetic sensor, a gyro sensor, a pressure sensor, a position sensor, and the like.

The one or more processors 140 control entire operations of the electronic device 100. Specifically, the one or more processors 140 may be connected with each of the elements of the electronic device 100 and may control the entire operations of the electronic device 100. For example, the one or more processors 140 may be connected with the output device 110 and the memory 120 operatively. The processors 140 may be comprised of one processor or a plurality of processors.

The one or more processors 140 may perform the operations of the electronic device 100 according to various embodiments by executing at least one instructions stored in the memory 120.

The one or more processors 140 may include one or more among a central processing unit (CPU), a graphics processing unit (GPU), an accelerated processing unit (APU), a many integrated core (MIC), a digital signal processor (DSP), a neural processing unit (NPU), an hardware accelerator or a machine learning accelerator. The one or more processors 140 may control one of the other elements of the electronic device 100 or any combination thereof, and performing an operation relating to communication or perform data processing. The one or more processors 140 may execute one or more programs or instructions stored in the memory. For example, the one or more processors may perform a method according to one or more embodiments of the disclosure, by executing one or more instructions stored in the memory.

In the case where the method according to the one or more embodiments includes a plurality of operations, the plurality of operations may be performed by one processor or a plurality of processors. For example, in the case where a first operation, a second operation, and a third operation are performed based on the method according to the one or more embodiments, the first operation, the second operation and the third operation may all be performed by a first processor, or the first operation and the second operation may be performed by the first processor (e.g., a generic-purpose processor), while the third operation may be performed by a second processor (e.g., an AI-oriented processor).

The one or more processors 140 may be implemented as a single core processor including one core, or one or more multicore processors including multiple cores (e.g., homogeneous multi cores or heterogeneous multi cores). In the case where the one or more processors 140 are implemented as a multicore processor, each of the multiple cores included in the multicore processor may include processor internal memory such as cache memory, and on-chip memory, and common cache shared by the multiple cores may be included in the multicore processor. Additionally, each of the multiple cores (or part of the multiple cores) included in the multicore processor may read and perform a program instruction for implementing the method according to the one or more embodiments independently, or in the way that all (or part) of the multiple cores are associated.

In the case where the method according to the one or more embodiments includes a plurality of operations, the plurality of operations may be performed by one core among the multiple cores included in the multicore processor, or by the multiple cores included in the multicore processor. For example, in the case where a first operation, a second operation, and a third operation are performed based on the method according to the one or more embodiments, the first operation, the second operation and the third operation may all be performed by a first core included in the multicore processor, or the first operation and the second operation may be performed by the first core included in the multicore processor, while the third operation may be performed by a second core included in the multicore processor.

In the embodiments of the disclosure, the processor may denote a system on a chip (SoC) where one or more processors and other electronic parts are integrated, a single core processor, a multicore processor, or a core included in a single core processor or a multicore processor, and herein, the core may be implemented as a CPU, a GPU, an APU, a MIC, a DSP, an NPU, a hardware accelerator, or a machine learning accelerator, and the like, but the embodiment thereof may not be limited thereto. Hereafter, one or more processors 140 are referred to as a processor 140 for convenience of description.

According to one embodiment, the processor 140 may control, based on a multi-view mode being executed, the output device 110 to output a screen including a background area and a plurality of display areas.

As one example, the multi-view mode may be a mode in which a plurality of content screens is provided at the same time. For example, in the multi-view mode, the background area as well as the plurality of display areas for providing a plurality of contents may be provided. For example, the background area may be provided as a predetermined theme image. The predetermined theme image may include various types of themes such as the nature, a city, the country, a home space, and the like.

As one example, the display areas may include images identical with/or similar to actual display product images. For example, the display areas may include various types of display product images such as a standing TV image, a wall-mounted TV image, a kiosk image and the like.

According to one embodiment, the processor 140 may identify, based on data obtained by the sensor 130, whether at least one among the plurality of display areas is covered by a peripheral object. For example, the processor 140 may identify, based on a captured image obtained through the camera, whether at least a partial area of at least one among the plurality of display areas is covered by a peripheral object.

According to one embodiment, the processor 140 may control, based on at least one among the plurality of display areas being identified as covered by the peripheral object, the output device 110 to replace a first display area covered by the peripheral object with a second display area and output the second display area. As one example, the second display area may be provided as an image of which at least one of a display size or a display location differs from that of the first display area and which relates to an image corresponding to the first display area.

According to one embodiment, the processor 40 may identify, based on the first display area being replaced with the second display area to identify depending on a relationship between a location of the peripheral object and a location for the second display area to be provided, whether at least part of the second display area is covered by the peripheral object. In this case, the processor 140 may control, based on at least part of the second display area being identified as covered by the peripheral object after the first display area is replaced with the second display area, the output device 110 to adjust at least one of a display size or a display location of the first display area and output an adjusted first display area without replacing the first display area with the second display area. Alternatively, the processor 140 may control the output device 110 to adjust a size of a projection screen itself and output an adjusted projection screen.

According to one embodiment, the processor 140 may control, based on at least part of the second display area being identified as covered by the peripheral object after the first display area is replaced with the second display area, the output device 110 to adjust at least one of the display size or display location of the second display area and output and adjusted second display area.

According to one embodiment, the processor 140 may control the output device 110 (e.g., an image projector) to identify, based on sensing data obtained by the sensor 130, a vanishing point of a space in which a screen is projected, generate a virtual surface area having a vanishing point identical with the vanishing point of the space, and output the screen including the virtual surface area to an external area of the background area.

According to one embodiment, the processor 140 may control the output device 110 (e.g., an image projector) to obtain an image outside the projection surface based on the sensing data, generate a virtual surface area based on the image outside the projection surface, reduce the background area and output a screen including the virtual surface area to an external area of the reduced background area.

According to one embodiment, the processor 140 may identify, based on at least one of user preference or content use history, a second display area, and control the output device 110 (e.g., an image projector) to replace a first display area with the second display and output the second display area.

According to one embodiment, the processor 140 may identify, based on the sensing data, feature information of a space to which a screen is output. For example, the feature information of a space may include various types of information relating to a space such as size information of a space, shape information of a space, the types and number, colors, disposition and the like of objects included in a space and the like. In this case, the processor 140 may control the output device 110 (e.g., an image projector) to identify, based on the feature information of a space, the second display area, and replace the first display area with the second display area and output the second display area.

According to one embodiment, the processor 140 may identify a bottom area included in the background area having a spatial sense, and control, based on at least part of the second display area being identified as covered by a peripheral object after the first display area is replaced with the second display area, the output device 110 (e.g., an image projector) to provide an effect in which the second display area is moved in a forward direction or a rearward direction in the bottom area. For example, the processor may control the output device 110 (e.g., an image projector) to move the second display area to a location of a predetermined ratio at a width of the bottom area (or a bottom surface) of a space included in the background area, and output the second display area. For example, the processor may control the output device 110 to provide an animation effect in which the second display area is moved in the bottom area gradually in the forward direction or the rearward direction.

According to one embodiment, the processor 140 may identify a bottom area included in the background area having a spatial sense, and control, based on at least part of the second display area being identified as covered by a peripheral object after the first display area is replaced with the second display area, the output device 110 (e.g., an image projector) to adjust (e.g., reduce) a size of the second display area and output the second display area. Alternatively, the processor 140 may control the output device 110 to adjust a size of a projection screen itself, which includes the second display area, and to output an adjusted projection screen.

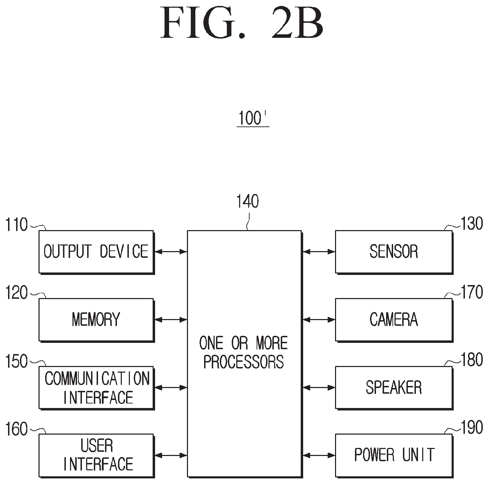

FIG. 2B is a view provided to explain a specific configuration of an electronic device according to one or more embodiments.

Referring to FIG. 2B, an electronic device 100' includes an output device 110, memory 120, a sensor 130, one or more processors 140, a communication interface 150, a user interface 160, a speaker 170 and a power unit 180. Detailed descriptions of elements overlapping the elements illustrated in FIG. 2A, are omitted among the elements illustrated in FIG. 2B.

The communication interface 150 may include circuitry, and perform communication with an external device (a server or a user terminal). For example, the processor 140 may receive various types of data or information from the external device connected with the processor 140 through the communication interface 150, or transmit various types of data or information to the external device.

The communication interface 150 may include at least one among a WiFi module, a Bluetooth module, a wireless communication module, an NFC module and an ultra-wide band (UWB) module. At this time, the wireless communication module may perform communication based on various communication standards such as IEEE, Zigbee, 3rd Generation (3G), 3rd Generation Partnership Project (3GPP), Long Term Evolution (LTE), 5th Generation (5G) and the like.

In addition, the communication interface 150 may also perform communication based on communication methods such as Ethernet, IEEE 1394, High-Definition Multimedia Interface (HDMI), Universal Serial Bus (USB), Mobile High-Definition Link (MHL), Audio Engineering Society/ European Broadcasting Union (AES/EBU), Optical, Coaxial and the like, depending on embodiments of the electronic device 100'.

The user interface 160 may be implemented as a device such as a button, a touch pad, a mouse, and a keyboard, or implemented as a touch projection surface capable of performing the above-described display function and manipulation input function together, a remote controller transceiver and the like. The remote controller transceiver may receive a remote control signal from an external remote control device or transmit a remote control signal to the external remote control device based on at least one communication method among infrared communication, Bluetooth communication, or WiFi communication.

The speaker 170 may output an audio signal. As one example, the speaker 170 may include a plurality of speaker units (or amplifiers) capable of outputting multi channels. For example, the speaker 170 may include an L-channel speaker and an R-channel speakers that replay an L channel and an R channel respectively.

The power unit 180 may receive power from the outside and supply the power to the elements of the electronic device 100. As one example, the power unit 190 may receive power by using a connector. For example, the power unit 180 may receive power by using a DC power code of 220V. However, the electronic device 100 may not be limited thereto, and receive power by using a USB power code or a wireless charging method.

The power unit 180 may receive power by using an internal battery or an external battery. For example, the power unit 180 may change the internal battery by using at least one among a DC power code of 220V, a USB power code, and a USB C-Type power code, and receive power through the charged internal battery. For example, the power unit 180 may receive, based on the electronic device 100 being connected with an external battery based on various wired communication methods such as a USB power code, a USB C-Type power code, a socket home and the like, power through the external battery. For example, the power unit 180 may receive power directly from an external battery, or charge an internal battery through an external battery and receive power from the changed internal battery.

In addition, the electronic device 100' may include a microphone and the like depending on embodiments. The microphone is an element for receiving a user voice or other sounds as an input and converting the user voice and sounds into audio data. However, the electronic device 100' according to another embodiment may receive, through the communication interface 150, a user voice input through an external device.

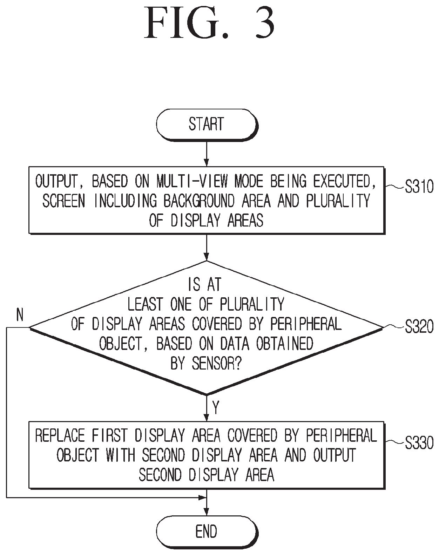

FIG. 3 is a flowchart provided to explain a control method for an electronic device according to one or more embodiments.

Referring to FIG. 3, in operation 310, the electronic device100 may output, based on a multi-view mode being executed, a screen including a background area and a plurality of display areas. For example, the plurality of display areas may be provided in a Picture-in-Picture (PIP) form, but is not limited thereto.

As one example, the multi-view mode may be executed (or proceed) based on a user command for selecting a multi-view mode, or a preset event. For example, the user command may be received through at least one among a remote control signal, a voice input, a gesture input, or eye tracking. For example, the predetermined event may include various events for providing a multi-view screen such as an event in which a plurality of contents is selected, an event in which an additional content is selected while a specific content is replayed, and the like.

As one example, UI images, sizes and the like of the plurality of display areas may be predetermined. However, the UI images, sizes and the like of the plurality of display areas may be changed based on a user commend, a context of the electronic device 100 and the like. For example, the context of the electronic device 100 may include current time, weather, selection contents, the number of users, a user location and the like.

As one example, the background area may be selected manually based on a user command. As another example, the background area may also be automatically selected based on user activity history, a user profile, user preference information, a content type selected in the display areas and the like.

In operation 320, the electronic device 100 may identify, based on data obtained by the sensor 130, whether at least one among the plurality of display areas is covered by a peripheral object. For example, the peripheral object may be an actual object such as furniture, a home décor item and the like.

As one example, the electronic device 100 may identify a plurality of display areas and a peripheral object respectively included in a projection screen from a captured image obtained through a camera to identify whether at least one among the plurality of display areas is covered by the peripheral object.

As one example, the electronic device 100 may identify whether at least one among the plurality of display areas is covered by the peripheral object based on at least one among object recognition, object detection, object tracking or image segmentation. For example, when necessary, the electronic device 100 may identify whether at least one among the plurality of display areas is covered by the peripheral object by using technologies such as semantic segmentation in which objects included in a captured image are sorted and extracted, instance segmentation in which objects are individually sorted and recognized even in the case of objects of the same type, bounding box which is formed into a square including detected objects at a time of detecting objects included in an image, and the like.

Based on a first display area among the plurality of display areas being identified as covered by the peripheral object (or an obstacle) based on the data obtained by the sensor 130 in operation 320 (S320: Y), the electronic device 100 may replace the first display area covered by the peripheral object with a second display area and output the second display area in operation 330.

As one example, the second display area may be an area relating to the first display area.

As one example, the second display area relating to the first display area may be provided as an association image of which at least one of a display size or a display location differs from that of the first display area and which relates to an image corresponding to the first display area. For example, an association image for a standing TV image may be a wall-mounted TV image. For example, an association image for a horizontal-mode TV image may be a vertical-mode TV image.

According to one embodiment, the electronic device 100 may identify a second image of the second display area based on a predetermined criterion.

As one example, the electronic device 100 may identify a second image of the second display area, which is previously mapped on a first image of the first display area.

As one example, the electronic device 100 may identify the second image of the second display area, which is previously mapped on the first image of the first display area, based on at least one of user preference or content use history. For example, the electronic device 100 may select an association image identified as preferred by a user based on multi-view mode use history information of the electronic device 100.

As one example, the electronic device 100 may identify the second image of the second display area, which is previously mapped on the first image of the first display area, based on at least one of user preference or content use history, according to feature information of a space to which a screen is output. For example, the electronic device 100 may obtain the feature information of a space through the sensor 130, and select an association image fit for the feature information of a space. For example, the feature information of a space may include information such as a size of a space, disposition of an object, a size of an object and the like.

For example, the electronic device 100 may identify a priority of a plurality of association images, and based on the priority of a plurality of association images, identify the second image of the second display area, which is previously mapped on the first image of the first display area. For example, the electronic device 100 may identify, based on the priority of a plurality of association images, a priority of the second image to replace the first image, and in the case where the first image is replaced with the second image, sequentially identify whether the second display area is covered by the peripheral object to identify an final association image.

In FIG. 3, the order of all the operations is mapped for convenience of description, but certainly, the order of operations and the like performable regardless of their order or in parallel may not be necessarily limited to the mapped order.

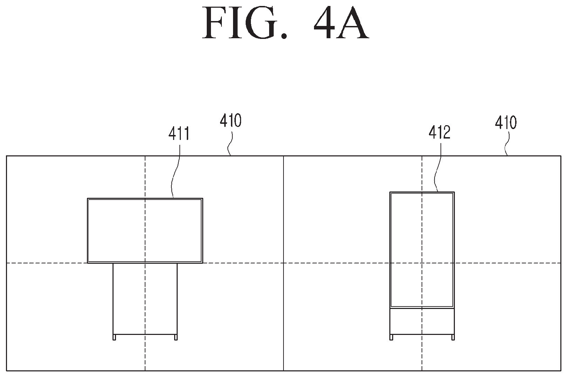

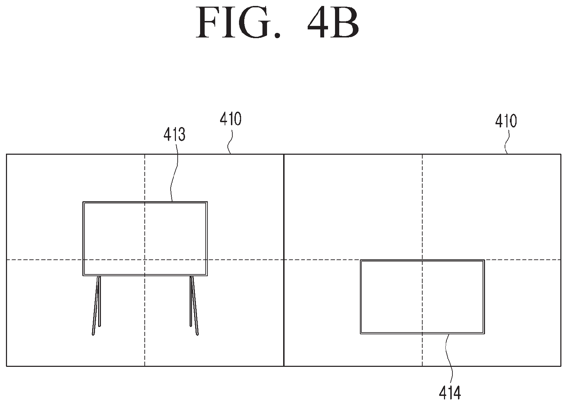

FIGS. 4A and 4B are views provided to explain an association image according to one or more embodiments.

As one example, as illustrated in FIG. 4A, a horizontal-mode TV image 411 and a vertical-mode TV image 412 may be mapped and previously stored as association images. For example, sizes and locations of the horizontal-mode TV image 411 and the vertical-mode TV image 412 on a screen 410 may be predetermined.

As one example, as illustrated in FIG. 4B, the standing TV image 413 and the wall-mounted TV image 414 may be mapped and stored previously as association images. For example, the sizes and locations of the standing TV image 413 and the wall-mounted TV image 414 on the screen may be stored previously.

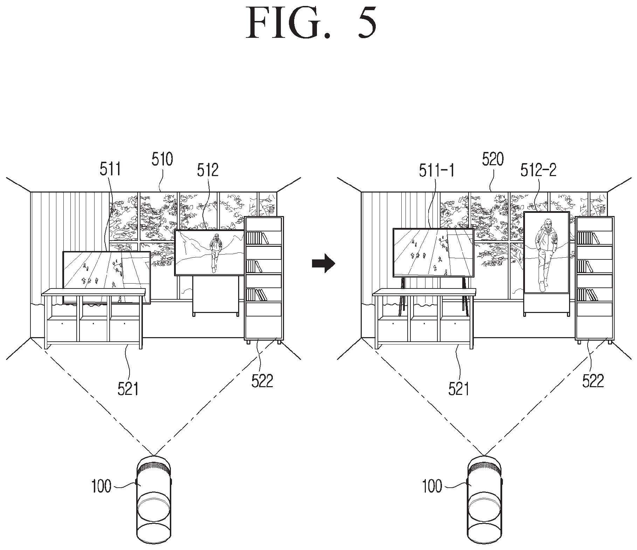

FIG. 5 is a view provided to explain a method of providing a multi-view mode according to one or more embodiments.

As one example, as illustrated on the left of FIG. 5, the electronic device 100 may project a screen 510 including a plurality of display areas 511, 512 onto a projection surface (e.g., a wall surface) of a specific space. As one example, in the case where part of the display areas 511, 512 included in the projection screen 510 is covered by a peripheral object 521, 522, viewing of content provided through the display areas 511, 512 may be interrupted. For example, the peripheral object 521, 522 may be an obstacle such as furniture and the like actually located in an actual space.

As one example, the electronic device 100 may identify, based on a captured image obtained through the sensor 130, whether the peripheral object 521, 522 covers the display areas 511, 512. For example, the electronic device 100 may identify whether the shadow of the peripheral object 521, 522 as well as the peripheral object 521, 522 covers the display areas 511, 512.

As one example, the electronic device 100 may project, based on the wall-mounted TV-type display area 511 being identified as covered by the peripheral object 521, a screen 520 in which the wall-mounted TV-type display area 511 is replaced with a standing TV-type display area 511-1, as illustrated on the right of FIG. 5.

As one example, the electronic device 100 may project, based on a horizontal-type display area 512 being identified as covered by the peripheral object 522, a screen 520 in which the horizontal-type display area 512 is replaced with a vertical-type display area 512-1, as illustrated on the right of FIG. 5.

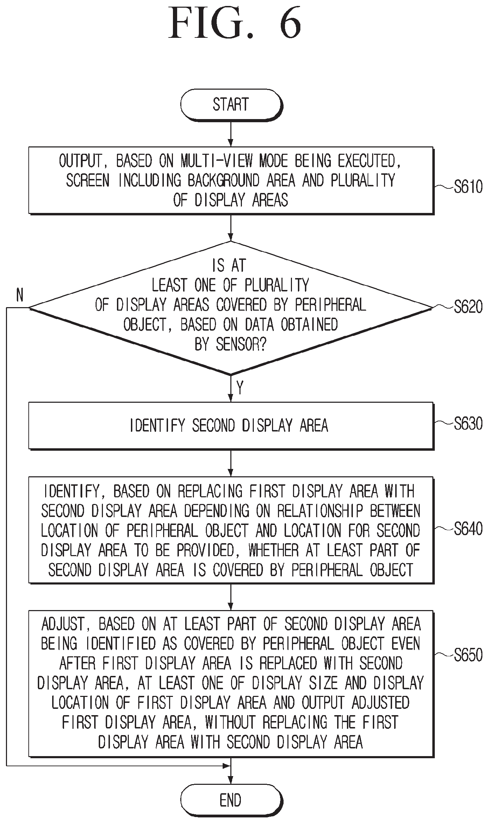

FIG. 6 is a flowchart provided to explain a control method for an electronic device according to one or more embodiments.

Referring to FIG. 6, the electronic device 100, in operation 610, may output, based on a multi-view mode being executed, a screen including a background area and a plurality of display areas.

In operation 620, the electronic device 100 may identify, based on data obtained by the sensor 130, whether at least one among the plurality of display areas is covered by a peripheral object. For example, the peripheral object may be an actual object such as furniture, a home décor item and the like.

In operation 630, the electronic device 100 may identify, based on a first display area as at least one among the plurality of display areas being identified as covered by the peripheral object (S620: Y) in operation 620, a second display area to be replaced with the first display area. As one example, the second display area may be an area associated with the first display area.

In operation 640, the electronic device 100 may identify, based on the first display area being replaced with the second display area depending on a relationship between a location of the peripheral object and a location for the second display area to be provided, whether at least part of the second display area is covered by the peripheral object. For example, the electronic device 100 may identify whether at least part of the second display area is covered by the peripheral object based on the first display area being replaced with the second display area. before the first display area is replaced with the second display area.

In operation 650, the electronic device 100 may adjust, based on at least part of the second display area being identified as covered by the peripheral object even after the first display area is replaced with the second display area, at least one of a display size or a display location of the first display area without replacing the first display area with the second display area and output an adjusted first display area.

In FIG. 6, the order of all the operations is mapped for convenience of description, but certainly, the order of operations and the like performable regardless of their order or in parallel may not be necessarily limited to the mapped order.

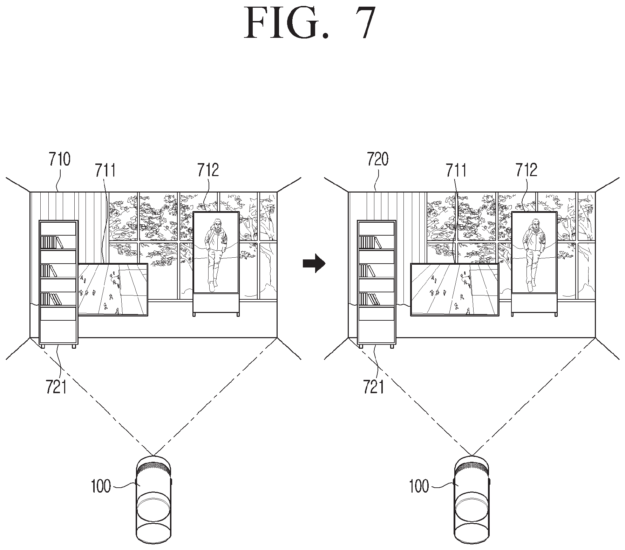

FIG. 7 is a view provided to explain a method of providing a multi-view mode according to one or more embodiments.

As one example, the electronic device 100 may project a screen 710 including a plurality of display areas 711, 712 onto a projection surface e (e.g., a wall surface) of a specific space, as illustrated on the left of FIG. 7. As one example, based on part of a display area 711 included in the projection screen 710 being covered by a peripheral object 721, viewing of content provided through the display area 711 may be interrupted. For example, the peripheral object 721 may be an obstacle such as furniture and the like actually located in a space.

As one example, the electronic device 100 may adjust, based on a wall-mounted TV-type display area 711 being identified as covered by the peripheral object 721, a location of the wall-mounted TV-type display area 711 to a location in which the wall-mounted TV-type display area 711 is not covered by the peripheral object 721, as illustrated on the right of FIG. 7. However, a size of the wall-mounted TV-type display area 711 may also be adjusted. For example, the electronic device 100 may adjust the size of the wall-mounted TV-type display area 711 to a size of which the wall-mounted TV-type display area 711 is not covered by the peripheral object 721, while maintaining a ratio of the wall-mounted TV-type display area 711.

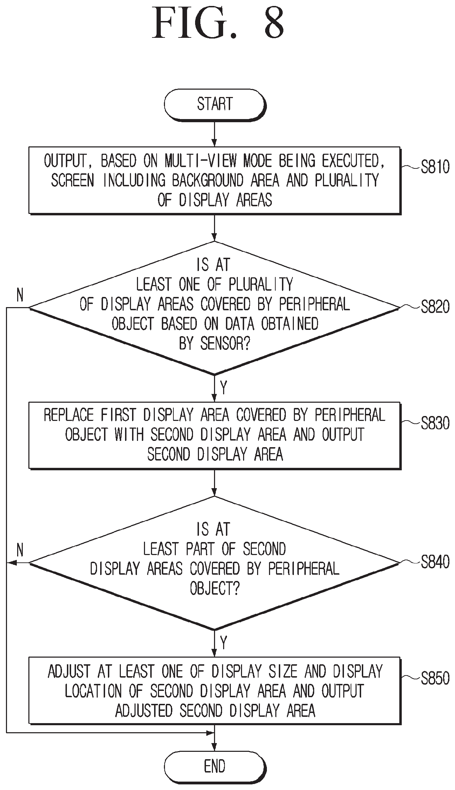

FIG. 8 is a flowchart provided to explain a control method for an electronic device according to one or more embodiments.

Referring to FIG. 8, the electronic device 100, in operation 810, may output, based on a multi-view mode being executed, a screen including a background area and a plurality of display areas.

In operation 820, the electronic device 100 may identify, based on data obtained by the sensor 130, whether at least one among the plurality of display areas is covered by a peripheral object. For example, the peripheral object may be an actual object such as furniture, a home décor item and the like.

In operation 830, the electronic device 100 may replace, based on at least part of a first display area among the plurality of display areas being identified as covered by the peripheral object in operation 820 (S820: Y), the first display area covered by the peripheral object with a second display area and output the second display area. As one example, the second display area may be an area associated with the first display area.

In operation 850, the electron device 100 may adjust, based on at least part of the second display area being identified as covered by the peripheral object after the first display area is replaced with the second display area in operation 840 (S840: Y), at least one of a display size or a display location of the second display area and output an adjusted second display area.

In FIG. 8, the order of all the operations is mapped for convenience of description, but certainly, the order of operations and the like performable regardless of their order or in parallel may not be necessarily limited to the mapped order.

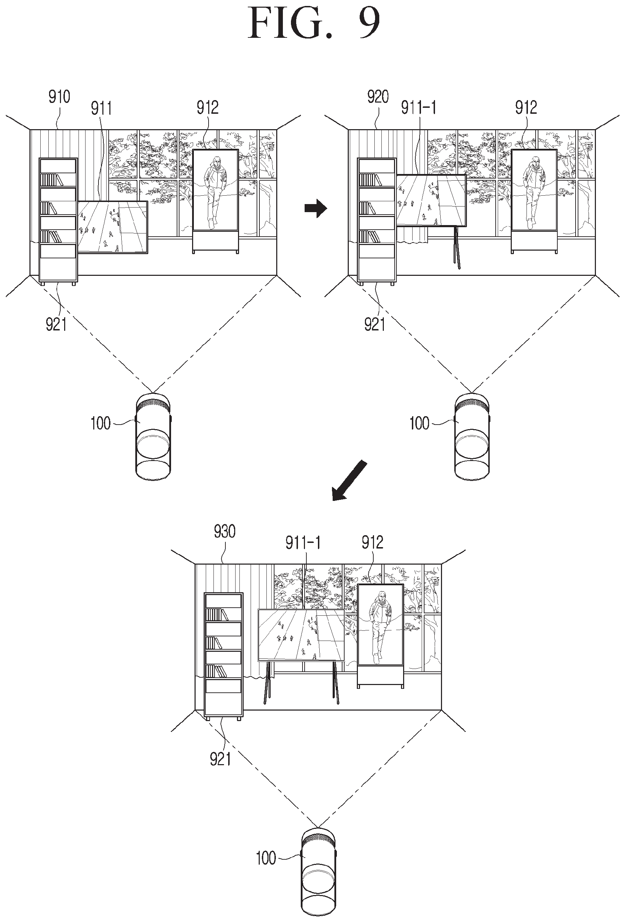

FIG. 9 is a view provided to explain a method of providing a multi-view mode according to one or more embodiments.

As one example, the electronic device 100 may project a screen 910 including a plurality of display areas 911, 912 onto a projection surface (e.g., a wall surface) of a specific space, as illustrated on the left of the upper end of FIG. 9. As one example, based on part of a display area 911 included in the projection screen 910 being covered by a peripheral object 921, viewing of content provided through the display area 911 may be interrupted. For example, the peripheral object 921 may be an obstacle such as furniture and the like actually located in a space.

As one example, the electronic device 100 may replace, based on a wall-mounted TV-type display area 911 being identified as covered by a peripheral object 721, the wall-mounted TV-type display area 911 with a standing display area 911-1 and output the standing display area 911-1, as illustrated on the right of the upper end of FIG. 9.

As one example, the electronic device 100 may adjust, based on at least part of the standing display area 911-1 being identified as covered by the peripheral object 921 after the wall-mounted TV-type display area 911 is replaced with the standing display area 911-1, a location of the standing display area 911-1 to a location in which the standing display area 911-1 is not covered by the peripheral object 921, as illustrated at the center of the lower end of FIG. 9. However, a size of the standing display area 911-1 may also be adjusted. For example, the electronic device 100 may adjust the size of the standing display area 911-1 to a size of which the standing display area 911-1 is not covered by the peripheral object 921, while maintaining a ratio of the standing display area 911-1.

As one example, a background area may be an area with a spatial sense. For example, the background area may include an image with a spatial sense although the image is a 2D image, but not be limited thereto. For example, the background area may be an image including a bottom area, a wall area, a ceiling area and the like, but is not limited thereto. In this case, the electronic device 100 may provide, based on at least part of a second display area being identified as covered by a peripheral object after a first display area is replaced with the second display area, an effect in which the second display area is moved in a forward direction or a rearward direction in a bottom area.

However, in some cases, the background area may also include a 3D image. Even in the case where the background area is a 3D image, an embodiment identical with/similar to that applied to a 2D image may also be applied to a 3D image.

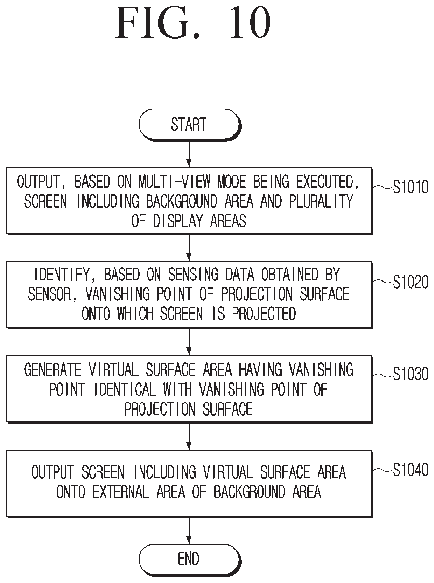

FIG. 10 is a flowchart provided to explain a control method for an electronic device according to one or more embodiments.

Referring to FIG. 10, the electronic device 100, in operation 1010, may output, based on a multi-view mode being executed, a screen including a background area and a plurality of display areas.

In operation 1020, the electronic device 100 may identify, based on data obtained by the sensor 130, a vanishing point of a space to which the screen is output. As one example, the electronic device 100 may identify a vanishing point of an actual space (e.g., a wall surface) with respect to a location of the electronic device 100 through a camera and a Time-of-Flight (ToF) sensor. For example, the vanishing point may be one point at which an extension line of an actual wall surface is concentrated and collected based on a perspective method.

In operation 1030, the electronic device 100 may generate a virtual surface area having a vanishing point identical with a vanishing point of a projection surface of a space to which the screen is output.

In operation 1030, the electronic device 100 may output a screen including the virtual surface area to an external area of the background area.

According to one embodiment, the electronic device 100 may obtain, based on sensing data, an image outside the projection surface, and generate, based on the image outside the projection surface, the virtual surface area. As one example, the electronic device 100 may reduce the background area and output the screen including the virtual surface area to an external area of the reduced background area.

As one example, the electronic device 100 may generate, based on data obtained by the sensor 130, a virtual surface area image. For example, the electronic device 100 may obtain, based on the data obtained by the sensor 130, an image corresponding to an actual space surface (e.g., a ceiling surface, a left wall surface, a right wall surface, a bottom surface and the like), and generate, based on the obtained image, the virtual surface area image.

As one example, the virtual surface area image may be a preset image. For example, the virtual surface area image may be an image similar to the background area. In this case, an effect in which the background area is expanded by the virtual surface area may be produced.

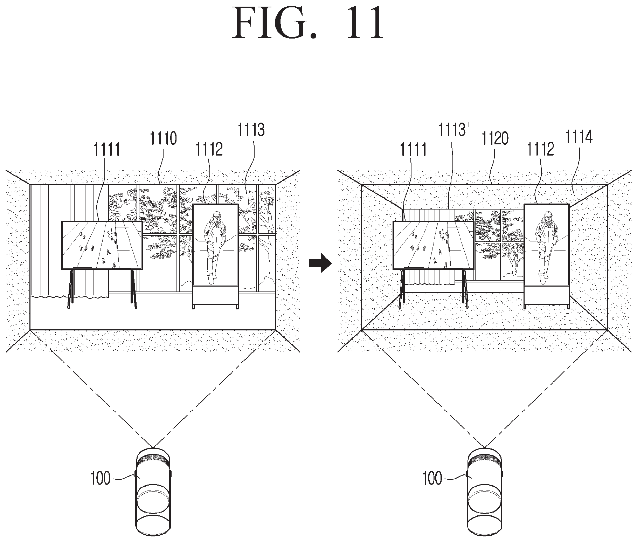

FIG. 11 is a view provided to explain a method of providing a multi-view mode according to one or more embodiments.

As one example, the electron device 100 may output, based on a multi-view mode being executed, a screen 1110 including a plurality of display areas 1111, 1112 and a background area 1113, as illustrated on the right of FIG. 11.

As one example, the electronic device 100 may identify, based on data obtained through the sensor 130, a vanishing point of a space to which the screen is output, as illustrated on the left of FIG. 11. As one example, the electronic device 100 may identify, based on a captured image obtained through a camera and distance information obtained through the ToF sensor, a vanishing point of an actual wall surface with respect to a location of the electronic device 100. For example, the distance information obtained through the ToF sensor may include distance information (e.g., a distance up to an actual wall surface, a distance up to an actual ceiling, a distance up to an actual bottom surface and the like) on a space constituting an actual space, a distance up to a projection surface, a distance up to a peripheral object and the like. For example, the electronic device 100 may identify vanishing points corresponding to four vertices of an actual wall surface.

As one example, the electronic device 100 may generate a virtual wall surface area having a vanishing point identical with the vanishing point of the actual wall surface, and output a screen 1120 including a virtual wall surface area 1114 to an external area of the background area 1113'. As one example, the electronic device 100 may re-identify, based on an image captured through a camera, whether a connection line of the actual wall surface and the virtual wall surface is connected in a straight line. Since a size of a projection screen is maintained, a size of the background area 1113' may be reduced, and the virtual wall surface area 1114 may be included in a remaining area.

An embodiment in which the electronic device 100 is implemented as a projector is described above, but an embodiment identical with/similar to the above-described embodiment may also be applied to an electronic device 100 implemented as a display device such as a TV.

According to the embodiments described above, at a time when a multi-view mode is provided, natural background and display areas fit for a space may be provided, and the visibility of a content screen may be enhanced, while a spatial sense may improve.

The methods according to the above-described embodiments may be implemented only by upgrading software or hardware of an existing electronic device.

Additionally, the above-described embodiments may also be implemented through an embedded server provided in an electronic device or through an external server of an electronic device.

The embodiments described above may be implemented with software including instructions stored in a storage medium readable by a machine (e.g., a computer). The machine, as a device capable of calling the stored instructions from the storage medium and operating according to the called instructions, may include an electronic device (e.g., electronic device A) according to the disclosed embodiments. Based on the instructions being executed by a processor, the processor may perform functions corresponding to the instructions directly or by using other elements under the control of the processor. The instructions may include a code generated or executed by a compiler or an interpreter. The machine-readable storage medium may be provided in the form of a non-transitory storage medium. Herein, the term "non-transitory" only means that the storage medium includes no signal and is tangible, while the term does not differentiate semi-permanent or temporary storage of data in the storage medium.

According to the embodiments described above, the method may be provided in a computer program product. The computer program product may be exchanged between a seller and a purchaser as a commodity. The computer program product may be distributed in the form of a machine-readable storage medium (e.g., compact disc read only memory (CD-ROM)) or distributed online through an application store (e.g., Play Store^{™}). In the case of online distribution, at least part of the computer program product may be stored at least temporarily, or may be generated temporarily in a storage medium such as a manufacturer's server, a server of an application store, or memory of a relay server.

Further, each of the elements (e.g., modules or programs) according to the embodiments described above may be comprised of a single entity or a plurality of entities, and some of the corresponding sub elements described above may be omitted, or another sub element may be further included in the embodiments. Alternatively or additionally, some of the elements (e.g., modules or programs) may be integrated into one entity to perform functions performed by each corresponding element prior to the integration, in an identical way or a similar way. Operations performed by a module, a program, or another element, according to the embodiments, may be executed sequentially, in parallel, repetitively, or heuristically, or at least part of the operations may be executed in a different order, omitted, or another operation may be added to the operations.

While example embodiments of the disclosure are illustrated and described above, embodiments of the disclosure are not limited to specific embodiments set forth herein, and certainly, various modifications thereof may be made by those skilled in the art, without departing from the matter of the disclosure, claimed in the section of claims, and should not be understood as separating from the technical spirit or prospect of the disclosure.

## Claims

1. An electronic device, comprising:
an output device;
a sensor;
memory storing one or more instructions; and
one or more processors,
wherein via execution of the one or more instructions, the one or more processors control, based on a multi-view mode being executed,the output device to output a screen including a background area and a plurality of display areas,
identify, based on data obtained by the sensor, whether at least one among the plurality of display areas is covered by a peripheral object, and
control, based on at least one among the plurality of display areas being identified as covered by the peripheral object, the output device to replace a first display area covered by the peripheral object with a second display area and output the second display area.

2. The electronic device of claim 1,
wherein the second display area is provided as an image of which at least one of a display size and a display location differs from that of the first display area and which relates to an image corresponding to the first display area.

3. The electronic device of claim 1,
wherein via execution of the one or more instructions, the one or more processors identify whether at least part of the second display area is covered by the peripheral object, based on the first display area being replaced with the second display area depending on a relationship between a location of the peripheral object and a location for the second display area to be provided, and
control, based on at least part of the second display area being identified as covered by the peripheral object even after the first display area is replaced with the second display area, the output device to adjust at least one of a display size and a display location of the first display area and output an adjusted first display area, without replacing the first display area with the second display area.

4. The electronic device of claim 1,
wherein via execution of the one or more instructions, the one or more processors control, based on at least part of the second display area being identified as covered by the peripheral object after the first display area is replaced with the second display area, the output device to adjust at least one of a display size and a display location of the second display area and output an adjusted second display area.

5. The electronic device of claim 1,
wherein the output device includes an image projector, and
wherein via execution of the one or more instructions, the one or more processors identify, based on sensing data obtained by the sensor, a vanishing point of a projection surface to which the screen is output,
generate a virtual surface area having a vanishing point identical with the vanishing point of the projection surface, and
control the image projector to output a screen including the virtual surface area to an external area of the background area.

6. The electronic device of claim 5,
wherein via execution of the one or more instructions, the one or more processors obtain, based on the sensing data, an image outside the projection surface,
generate, based on the image outside the projection surface, the virtual surface area, and reduce the background area and control the image projector to output a screen including the virtual surface area to an external area of the reduced background area.

7. The electronic device of claim 1,
wherein via execution of the one or more instructions, the one or more processors identify, based on at least one of user preference or content use history, the second display area, and control the output device to replace the first display area with the second display area and output the second display area.

8. The electronic device of claim 1,
wherein via execution of the one or more instructions, the one or more processors identify, based on the sensing data, feature information of a space to which the screen is output, and
identify, based on the feature information of the space, the second display area, and control the output device to replace the first display area with the second display area and output the second display area.

9. The electronic device of claim 1,
wherein the background area is an area having a spatial sense, and
wherein via execution of the one or more instructions, the one or more processors identify a bottom area included in the background area, and
control, based on at least part of the second display area being identified as covered by the peripheral object after the first display area is replaced with the second display area, the output device to provide an effect in which the second display area is moved in a forward direction or rearward direction in the bottom area included in the background area.

10. The electronic device of claim 1,
wherein the output device includes at least one of a display or an image projector.

11. A control method for an electronic device, the method comprising:
outputting, based on a multi-view mode being executed, a screen including a background area and a plurality of display areas;
identifying, based on data obtained by the sensor, whether at least one among the plurality of display areas is covered by a peripheral object; and
replacing, based on at least one among the plurality of display areas being identified as covered by the peripheral object, a first display area covered by the peripheral object with a second display area and outputting the second display area.

12. The method of claim 11,
wherein the second display area is provided as an image of which at least one of a display size and a display location differs from that of the first display area and which relates to an image corresponding to the first display area.

13. The method of claim 11,
wherein the identifying whether at least one among the plurality of display areas is covered includes identifying, based on the first display area being replaced with the second display area depending on a relationship between a location of the peripheral object and a location for the second display area to be provided, whether at least part of the second display area is covered by the peripheral object,
the method further comprising:
controlling, based on at least part of the second display area being identified as covered by the peripheral object even after the first display area is replaced with the second display area, the output device to adjust at least one of a display size and a display location of the first display area and output an adjusted first display area, without replacing the first display area with the second display area.

14. The method of claim 11 further comprising:
adjusting, based on at least part of the second display area being identified as covered by the peripheral object after the first display area is replaced with the second display area, at least one of a display size and a display location of the second display area and outputting an adjusted second display area.

15. A non-transitory computer-readable medium storing computer instructions that when executed by a processor of an electronic device, cause the electronic device to perform operations, the operations comprising:
outputting, based on a multi-view mode being executed, a screen including a background area and a plurality of display areas;
identifying, based on data obtained by the sensor, whether at least one among the plurality of display areas is covered by a peripheral object; and
replacing, based on at least one among the plurality of display areas being identified as covered by the peripheral object, a first display area covered by the peripheral object with a second display area and outputting the second display area.
